# EUROPÄISCHE PATENTSCHRIFT

(11) **EP 3 443 188 B1**
(45) Veröffentlichungstag und Bekanntmachung des Hinweises auf die Patenterteilung: **22.09.2021**
(21) Anmeldenummer: 17706140.5
(22) Anmeldetag: 24.01.2017
(51) Int. Cl.: E05B 81/54, E05B 17/10, E05B 17/22, B60Q 1/26

(54) **KRAFTFAHRZEUGSCHLOSS**
MOTOR VEHICLE LOCK
SERRURE DE VÉHICULE AUTOMOBILE

(30) Priorität: 26.02.2016 DE 102016103428
(43) Veröffentlichungstag der Anmeldung: 20.02.2019
(73) Patentinhaber: Kiekert AG, 42579 Heiligenhaus (DE)
(72) Erfinder: KUNST, Frank, 59348 Lüdinghausen (DE)
(74) Vertreter: Andrejewski - Honke Patent- und Rechtsanwälte Partnerschaft mbB
(86) Internationale Anmeldenummer: PCT/DE2017/100037
(87) Internationale Veröffentlichungsnummer: WO 2017/144041

(56) Entgegenhaltungen:
- WO-A1-2004/113654
- WO-A1-2014/183741
- WO-A1-2017/129159
- DE-A1- 19 528 093
- DE-A1-102014 104 545
- DE-A1-102016 101 226
- US-B1- 9 127 477

## Beschreibung

Die Erfindung betrifft ein Kraftfahrzeug-Schloss, insbesondere ein Kraftfahrzeug-Türschloss, umfassend ein Schlossgehäuse, eine elektrische Stromversorgung, ein Leuchtmittel und ein mit dem Leuchtmittel zusammenwirkendes Lichtleitelement, wobei das Lichtleitelement als integraler Bestandteil des Kraftfahrzeug-Schlosses ausgebildet ist, sodass das Kraftfahrzeug-Schloss zumindest bereichsweise ausleuchtbar ist.

Sind Kraftfahrzeuge im Straßenverkehr eingesetzt, so unterliegen sie einer Reihe von Sicherheitsvorschriften. Insbesondere die Beleuchtung eines Kraftfahrzeugs ist in den vergangenen Jahren mehr und mehr in den Vordergrund gerückt. So gibt es heute bereits Fahrzeuge, die über ein Fahrlicht verfügen, dass unabhängig von Abblendlicht, mit dem in der Dunkelheit gefahren wird, auch bei Tag das Fahrzeug illuminiert und sich somit für die Verkehrsteilnehmer besser sichtbar gestaltet. Das Licht am Kraftfahrzeug ist somit ein sicherheitsrelevantes Merkmal.

Zur weiteren Erhöhung der Sicherheit für den Fahrzeugführer wie auch weitere Verkehrsteilnehmer ist es darüber hinaus bekannt, eine sich öffnende Tür und/oder Klappe eines Kraftfahrzeugs mit einem Leuchtmittel, Reflektoren oder lumineszierenden Bestandteilen auszuführen, so dass den weiteren Verkehrsteilnehmern mittels eines Lichteffekts die Bewegungen am Kraftfahrzeug anzeigbar sind.

So ist beispielsweise aus der JP 2002-264651 A1 eine Kraftfahrzeugschließeinrichtung bekannt geworden, bei der die im Schließsystem angeordnete Drehfalle mit einer lumineszierenden Oberfläche versehen ist, so dass in der Dunkelheit und/oder bei schlechter Sicht ein Lichteffekt erzeugt wird, der die Sicherheit am Kraftfahrzeug erhöht. Beispielhaft ist der Druckschrift ein Kraftfahrzeug-Schloss für eine Seitentür zu entnehmen, indem die Drehfalle des Kraftfahrzeug-Schlosses im geöffneten Zustand durch ein Einlaufmaul des Kraftfahrzeug-Schlosses hindurch sichtbar bleibt, auch wenn die Drehfalle bzw. das Gesperre des Kraftfahrzeug-Schlosses sich im geöffneten, das heißt entsperrten Zustand befindet.

Aus der DE 39 08 095 A1 sind ebenfalls Rückleuchten und Reflektoren bekannt geworden, die auf ein Öffnen der Tür hinweisen bzw. während des Öffnens der Tür entweder ein auf die Tür fallendes Licht reflektieren oder selbst als Leuchtmittel anzeigen, dass die Tür geöffnet ist. Offenbart ist ein Türeinrichtungselement, das mit verschiedenen Lichtern, wie beispielsweise einer Leseleuchte, einer Rückleuchte und einer Bodenleuchte ausgestattet ist. Darüber hinaus kann das Türeinrichtungselement Reflektoren umfassen. Dabei kann auch eine Rückleuchte in einen Rand des Einlaufschlitzes integriert sein, wobei der Einlaufschlitz gleichmäßig erweitert wurde. All diese Maßnahmen dienen dazu, die Verkehrsteilnehmer auf eine geöffnete oder sich öffnende Tür hinzuweisen und somit die Sicherheit des Verkehrs zu gewährleisten.

Aus der DE 20 2008 005 174 U1 ist eine Kraftfahrzeug-Schlossanordnung für eine Kraftfahrzeugtür bekannt geworden, bei der das Kraftfahrzeug-Schloss mit einer Leuchtanordnung ausgebildet ist, wobei die Leuchtanordnung eine elektrische Lichtquelle aufweist, deren Lichtstrahlung über ein Leuchtelement abgebbar ist. In einer Ausführungsform kann die Lichtquelle so in das Schlossgehäuse eingelassen sein, dass nur die lichtabstrahlende Oberfläche der Lichtquelle aus dem Schlossgehäuse nach außen weist. Bevorzugt offenbart die DE 20 2008 005 174 U1 aber eine Lichtquelle, die mit einem Lichtleiter zusammenwirkt, die das Licht der Lichtquelle an ein Leuchtelement weiterleitet, wobei das Leuchtelement eine Optik zur Abgabe der Lichtstrahlung umfasst. Die aus dem Stand der Technik bekannten Anzeigemittel bzw. Leuchtmittel weisen dabei den Nachteil auf, dass sie entweder keine ausreichende Lichtintensität bereitstellen, als separates Leuchtmittel zusätzliche Montageschritte erfordern und/oder auf zusätzliche Öffnungen im Kraftfahrzeug angewiesen sind.

Ein Kraftfahrzeug-Schloss des eingangs beschriebenen Aufbaus wird in der US 9,127,477 B1 beschrieben. Hier geht es im Endeffekt darum, eine zugehörige Handhabe des Kraftfahrzeug-Türschlosses respektive eine die Handhabe aufnehmende Ausnehmung auszuleuchten. Dazu sind zusätzlich eine Solarzelle und eine Batterie vorgesehen. Auf diese Weise kann mit Hilfe eines Sensors die Beleuchtung eingeschaltet werden.

Bei einem anderen Kraftfahrzeug-Schloss entsprechend der WO 2004/113654 A1 oder gemäß der WO 2014/183741 A1 sind in ein Seitentürschloss oder eine Heckklappe integrierte Leuchtmittel vorgesehen. Bei dem Leuchtmittel handelt es sich um eine oder mehrere Leuchtioden, die im Einführungsbereich eines Einlaufmauls angeordnet sind.

Der Erfindung liegt das technische Problem zugrunde, die Sicherheit an einem Kraftfahrzeug weiter zu erhöhen und darüber hinaus ein kostengünstiges und konstruktiv einfaches Sicherungssystem für ein Kraftfahrzeug-Schloss bereitzustellen.

Zur Lösung dieser technischen Problemstellung ist ein Kraftfahrzeug-Schloss mit den Merkmalen des unabhängigen Patentanspruches 1 realisiert. Vorteilhafte Ausgestaltung der Erfindung sind in den Unteransprüchen angegeben.

Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen beschriebenen Merkmale möglich.

Gemäß dem Patentanspruch 1 wird die Aufgabe der Erfindung dadurch gelöst, dass ein Kraftfahrzeug-Schloss bereitgestellt wird, umfassend ein Schlossgehäuse, eine elektrische Stromversorgung, ein Leuchtmittel und ein mit dem Leuchtmittel zusammenwirkendes Lichtleitelement, wobei das Lichtleitelement als integraler Bestandteil des Kraftfahrzeug-Schlosses ausgebildet ist, so dass das Kraftfahrzeug-Schloss zumindest bereichsweise ausleuchtbar ist, wobei als Leuchtmittel eine LED eingesetzt wird, die unmittelbar auf einer Leiterplatte angeordnet ist und wobei mittels des Lichtleitelementes das vom Leuchtmittel emittierte Licht in Richtung eines Einlaufmauls mit einer im Einlaufmaul angeordneten Drehfalle geleitet wird, wobei um das Einlaufmaul herum Lichtaustrittsflächen des Lichtleitelementes angeordnet sind. Durch die erfindungsgemäße Ausbildung des Kraftfahrzeug-Schlosses ist nun die Möglichkeit geschaffen, ein lichtintensives Sicherungssystem für ein Kraftfahrzeug bereitzustellen, mit dem die Sicherheit an einem Kraftfahrzeug erhöht wird und die gleichzeitig als integraler Bestandteil des Kraftfahrzeug-Schlosses ausgebildet ist. Insbesondere die Ausbildung als integraler Bestandteil bietet dabei die Möglichkeit, eine kostengünstige Lösung zur Erzielung eines Sicherungsmittels bereitzustellen, die gleichzeitig mit minimalem konstruktivem Aufwand realisierbar ist.

Kraftfahrzeug-Schlösser kommen nicht nur bei Türen, Klappen, Hauben, Schiebetüren zum Einsatz, sondern können auch zum Beispiel im Bereich von Abdeckungen, wie sie beispielsweise für Cabriodächer verwendet werden, eingesetzt werden. Neben der Warnfunktion, die bevorzugt bei Türen oder Klappen im Vordergrund steht, kann die erfindungsgemäße Beleuchtungseinrichtung auch zum Beispiel bei Klappen dazu dienen, anzuzeigen, ob die Klappe vollumfänglich und richtig geschlossen wurde. So kann das Kraftfahrzeug-Schloss zum Beispiel einen Mikroschalter umfassen, der erst geschaltet wird, wenn das Kraftfahrzeug-Schloss in seine endgültige verschlossene Position gelangt ist. Bei Kraftfahrzeug-Türschlössern ist das beispielsweise eine Hauptrastposition des Gesperres, in der eine Drehfalle mittels zum Beispiel einer Sperrklinke verrastet ist.

Das Kraftfahrzeug-Schloss umfasst ein Schlossgehäuse, das bevorzugt aus Kunststoff gefertigt ist. Ein Schlossgehäuse besteht bevorzugt aus zwei Teilen, einem Gehäuseboden und einem Gehäusedeckel, die miteinander zumeist wasserdicht verbindbar sind. Das Schlossgehäuse ist dabei derart ausgebildet, dass ein Öffnungsbereich des Schlosses, der mit einem zum Beispiel Schließbolzen zusammenwirkt, umfänglich umschlossen ausgeführt ist. Dieser Öffnungsbereich wird auch Öffnungsmaul genannt. Zur Stabilisierung des Schlosses und insbesondere zur stabilen Lagerung eines im Schloss befindlichen Gesperres umschließt das Schlossgehäuse eine Schlossplatte. Die Schlossplatte kann das Schlossgehäuse zumindest bereichsweise umschließen, wobei je nach Ausführungsform die Schlossplatte auch das Öffnungsmaul umschließen kann.

Das Kraftfahrzeug-Schloss umfasst ferner eine Stromversorgung, wobei der elektrische Strom zumeist mittels eines Streckers in das Schloss eingeleitet wird, wobei der Strom über Leiterbahnen und/oder eine Leiterplatte verteilbar ist. Bevorzugt ist das Leuchtmittel unmittelbar auf einer Leiterplatte angeordnet.

Erfindungsgemäß wird als Leuchtmittel eine LED eingesetzt, die unmittelbar auf der Leiterplatte angeordnet ist. Die unmittelbare Anordnung auf der Leiterplatte bietet dabei den Vorteil, dass ein Ansteuern erleichtert wird und gleichzeitig keine zusätzlichen elektrischen Leiterbahnen zur Kontaktierung des Leuchtmittels benötigt werden. Die Verwendung eines Lichtleitelements ist dahingehend vorteilhaft, weil dadurch die Möglichkeit geschaffen wird, das Leuchtmittel beliebig im Kraftfahrzeug-Schloss und insbesondere unmittelbar auf der bereits im Schloss vorhandenen Leiterbahn und/oder Leiterplatte anzuordnen. Mittels des Lichtleitelements ist dann die Möglichkeit geschaffen, das vom Leuchtmittel emittierte Licht an eine Oberfläche des Kraftfahrzeug-Schlosses weiterzuleiten.

Gemäß der Erfindung ist das Lichtleitelement als integraler Bestandteil des Kraftfahrzeug-Schlosses ausgebildet. Integraler Bestandteil meint hierbei, dass das Lichtleitelement zumindest bereichsweise aus dem Schlossgehäuse gebildet ist. Somit kann je nach Anordnung des Leuchtmittels unmittelbar Licht in das Schlossgehäuse eingeleitet werden. Dabei ist es natürlich vorstellbar, dass das Schlossgehäuse eine Verlängerung aufweist, die dann als Lichtleitelement fungiert und unmittelbar an das Leuchtmittel adaptierbar ist. Durch die Ausbildung eines integralen Lichtleitelements als Bestandteil des Kraftfahrzeug-Schlosses kann eine kostengünstige Möglichkeit geschaffen werden, um ein Ausleuchten zumindest eines Bereichs des Kraftfahrzeug-Schlosses zu ermöglichen.

In einer Ausführungsform der Erfindung ergibt sich dann ein Vorteil, wenn das Lichtleitelement in das Schlossgehäuse integriert ist. Das Lichtleitelement bildet einen integralen Bestandteil des Schlossgehäuses, wobei Bereiche des Schlossgehäuses durch das Lichtleitelement substituiert wurden. Das Lichtleitelement bildet somit als integraler Bestandteil einen Teil des Gehäuses des Kraftfahrzeug-Schlosses. Wird in einer Ausführungsform das Lichtleitelement bzw. das Leuchtmittel unmittelbar hinter oder am Lichtleitelement angeordnet, so kann darüber hinaus auf eine Verlängerung am Lichtleitelement verzichtet werden, so dass ein unmittelbares Ausleuchten des Lichtleitelementes möglich ist. Auch wenn hier bevorzugt ein Leuchtmittel genannt ist, so ist es ebenfalls vorstellbar, dass zwei oder mehr Leuchtmittel in dem Kraftfahrzeug-Schloss vorgesehen sind. Neben ein, zwei oder mehr Leuchtmitteln ist es natürlich ebenfalls vorstellbar, dass zwei oder mehr Lichtleitelemente in dem Kraftfahrzeug-Schloss angeordnet sind, die mit einem oder mehreren Leuchtmitteln zusammenwirken. Darüber hinaus sind auch Verzweigungen bzw. Abzweigungen im Lichtleitelement vorsehbar, sodass separate Bereiche in dem Kraftfahrzeug-Schloss ausrichtbar sind.

Ist das Licht des Leuchtmittels mittels des Lichtleitelementes in Richtung einer in einer Kraftfahrzeugtür vorhandenen Öffnung leitbar, so ergibt sich eine weitere vorteilhafte Ausführungsform der Erfindung. Das Kraftfahrzeug-Schloss kann Öffnungen aufweisen, durch die beispielsweise eine Notbetätigung, eine Kindersicherung erreichbar ist oder beispielsweise das Gesperre mit einem Schlosshalterbügel zusammenwirkt. In vorteilhafter Weise kann mittels des Lichtleitelements das Licht vom Leuchtmittel unmittelbar an die Öffnung in dem Kraftfahrzeug-Schloss weitergeleitet werden. Durch die Nutzung der bereits im Kraftfahrzeug vorhandenen Öffnungen kann eine Beleuchtungseinrichtung bzw. ein Sicherungssystem in das Kraftfahrzeug-Schloss integriert werden, ohne dass bauliche Veränderungen am Kraftfahrzeug erforderlich sind. Die Öffnungen weisen dann eine Doppelfunktion auf, da sie einerseits für die Funktion des Schließsystems einsetzbar sind und darüber hinaus eine Sicherungsfunktion im Verkehr erfüllen.

In einer bevorzugten Ausführungsform umschließt das Lichtleitelement die Öffnung zumindest bereichsweise. Je nach Größe der Öffnung und gewünschtem Signaleffekt bzw. Sicherungseffekt kann es sinnvoll sein, lediglich Teilbereiche der Öffnung auszuleuchten oder es kann darüber hinaus ebenfalls vorteilhaft sein, dass die Öffnung vollumfänglich vom Lichtleitelement umschlossen wird. Wird das Lichtleitelement beispielsweise als partielles Element oder aus einer Vielzahl von zwei oder mehr Teilen am Umfang der Öffnung ausgebildet, so kann eine weitere Warnfunktion erzielt werden. Einerseits kann durch eine Anzahl von Lichtleitelementen am Umfang eine Symbolik erzielt werden und darüber hinaus ist es auch vorstellbar, dass durch zwei oder mehr Leuchtmittel ein dynamischer Effekt in den Leuchtmitteln erzielbar ist. Werden die Leuchtmittel beispielsweise nacheinander angeschaltet, so kann beispielsweise eine bewegt erscheinende Anzeige generiert werden. Darüber hinaus kann auch durch unterschiedliche Farbgebungen des Leuchtmittels bzw. des Lichtleitmittels ein Effekt erzielt werden, der eine Warn- und/oder Sicherungsfunktion unterstützt.

In einer weiteren vorteilhaften Ausgestaltung der Erfindung ist das Lichtleitelement einstückig mit dem Schlossgehäuse ausgebildet. Die einstückige Ausbildung des Schlossgehäuses ist die Möglichkeit geschaffen, eine äußerst kostengünstige Herstellung des Schlossgehäuses mit Warn- und/oder Sicherungsfunktion zu realisieren. Es können Montageschritte entfallen, die Anbindung an das Leuchtmittel kann erleichtert werden und es können darüber hinaus für ein Leuchtmittel bzw. ein Lichtleitelement schwer zugängliche Bereiche im Kraftfahrzeug-Schloss ausgeleuchtet werden. Die einstückige Ausbildung bietet darüber hinaus den Vorteil, dass ein sicheres Fixieren des Lichtleitelementes unmittelbar gegeben ist. Somit ergeben sich montagetechnische, das heißt herstellungstechnische Vorteile, konstruktive Vorteile aber auch Vorteile in Bezug auf eine optimale Ausleuchtung des Kraftfahrzeug-Schlosses.

Sind mittels des Lichtleitelements zwei oder mehr Bereiche des Kraftfahrzeug-Schlosses ausleuchtbar, so ergibt sich eine weitere vorteilhafte Ausgestaltungsform der Erfindung. Neben der Anordnung eines oder mehrerer ausleuchtbarer Bereiche um eine Öffnung im Schließsystem herum besteht auch die Möglichkeit, das Lichtleitelement verzweigt auszubilden, so dass mittels eines Leuchtmittels unterschiedliche Bereiche des Schlosses ausleuchtbar sind.

Ist das Leuchtmittel unmittelbar auf einem Elektrokomponententräger angeordnet, so ergibt sich eine weitere vorteilhafte Ausführungsform der Erfindung. Kraftfahrzeug-Schlösser umfassen zumeist mindestens einen Elektromotor, mit dem zum Beispiel eine zentrale Verriegelung ansteuerbar ist. Um die elektrische Komponente im Schloss einerseits mit Strom zu versorgen und andererseits um die Steuerbefehle und/oder weitere elektrische Komponenten, wie beispielsweise Mikroschalter, zu steuern im Schloss ein Elektrokomponententräger anordbar. Der Elektrokomponententräger kann als separates Bauteil oder als integraler Bestandteil des Schlossgehäuses ausgebildet sein. In vorteilhafter Weise kann das Leuchtmittel dann auf dem Elektrokomponententräger unmittelbar zum Beispiel verlötet und/oder eingesteckt sein. Dadurch ergibt sich der Vorteil, dass keine separaten Steuerleitungen oder Leitungen zur Stromversorgung zum Leuchtmittel hin auszubilden sind. Vorstellbar ist es auch, dass das Leuchtmittel auf einer am Elektrokomponententräger an oder im Schloss befindlichen Leiterplatte befestigt ist, so dass wiederum keine separaten Steuer- und/oder Stromleitungen zum Leuchtmittel hin auszubilden sind. Mittels des Lichtleitelements kann dann das vom Leuchtmittel emittierte Licht an die ausleuchtbaren Bereiche des Kraftfahrzeug-Schlosses weiter geleitet werden.

In einer weiteren Ausführungsform umfasst das Lichtleitelement zumindest bereichsweise, vorzugsweise im Bereich einer Lichtaustrittsfläche, lichtstreuende Elemente. Die Lichtintensität, die mittels des Lichtleitelements an die Umgebung abgebbar ist, ist einerseits abhängig von dem in das Lichtleitelement eingeleiteten Lichtmenge und andererseits davon, wie das Licht aus dem Lichtleitelement austritt. Um einerseits eine hohe Lichtintensität aus dem Lichtelement austreten zu lassen und andererseits, um eine gleichmäßige Verteilung über die Austrittsfläche zu erzielen, können im Lichtleitelement lichtstreuende Elemente vorhanden sein. Die lichtstreuenden Elemente bewirken dabei, dass selbst bei lediglich einem geringen Durchmesser eines Lichtleitelements, das sich vom Leuchtmittel hin zur Lichtaustrittsfläche erstreckt, das Licht über die gesamte Lichtaustrittsfläche gleichmäßig verteilt. Insbesondere kann das Lichtleitelement von seiner Ausdehnung her differgieren. So kann das Lichtleitelement im Anschlussbereich zum Leuchtmittel einen beispielsweise geringen Durchmesser aufweisen, wobei die Lichtaustrittsfläche sich über einen größeren Bereich bzw. mehrere Bereiche erstrecken kann. Die Lichtaustrittsfläche kann somit eine vom lichtleitenden Lichtleitelement unterscheidbare Ausdehnung im Kraftfahrzeugschließsystem aufweisen. Insbesondere dann, wenn sich die Lichtaustrittsfläche über einen größeren Bereich und/oder Umfang erstreckt, sind lichtstreuende Partikel im lichtleitenden Kunststoff vorteilhaft einsetzbar.

Umfasst das Lichtleitelement zumindest bereichsweise, vorzugsweise in einem lichtleitenden Bereich, lichtfokussierende und/oder reflektierende Elemente und/oder Oberflächen, so ergibt sich eine weitere vorteilhafte Ausgestaltung der Erfindung. Lichtfokussierend können zum Beispiel Oberflächen an einer Lichtaustrittsfläche sein. Dabei ist es vorstellbar, die Lichtaustrittsfläche zum Beispiel kegelförmig oder als Hohlfläche auszubilden. Je nach Ausbildung der Oberfläche kann es dann zu einer Fokussierung des aus dem Lichtleitelement austretenden Licht kommen. Somit ist es beispielsweise vorstellbar, spezielle Bereiche des Umfelds der Tür oder die Tür selbst zielgerichtet auszuleuchten. Zusätzliche reflektierende Bereiche am Lichtleitelement können zum Beispiel dazu dienen, die Lichtintensität bzw. die Sichtbarkeit des Lichtleitelements zu erhöhen. Insbesondere bei Dunkelheit dient das Lichtleitelement und insbesondere der sichtbare Bereiche des Lichtleitelements im Kraftfahrzeug-Schloss dazu, die Verkehrssicherheit zu erhöhen. Werden nun zusätzlich lichtreflektierende Oberflächen am Lichtleitelement ausgebildet, so kann einerseits das Licht im Lichtleitelement zielgerichtet fokussiert und/oder geleitet werden und andererseits ist es möglich, dass ein Licht, das von außerhalb auf das Kraftfahrzeug leuchtet, vom Lichtleitelement reflektiert wird, was die Sichtbarkeit des Lichtleitelements zusätzlich erhöht. Lichtfokussierende und/oder reflektierende Elemente und/oder Oberflächen können somit einzeln oder in Kombination dazu dienen, die Lichtintensität, die vom Lichtleitelement abgebbar ist, zu erhöhen.

In einer weiteren vorteilhaften Ausgestaltungsform der Erfindung ist zumindest das Lichtleitelement aus Polycarbonat oder Polymethylmethacrylat gebildet. Polycarbonat (PC) oder Polymethylmethacrylat (PMMA) sind synthetische, transparente, thermoplastische Kunststoffe, mit einer vorteilhaften Lichtleiteigenschaft. Insbesondere in Kombination zum Beispiel mit reflektierenden Oberflächen, lichtstreuenden Elementen und einer geeigneten Oberflächenform kann in erfindungsgemäßer Weise eine hohe Lichtintensität mittels des Lichtleitelements an die Umgebung des Kraftfahrzeugs abgegeben werden, so dass sich die Sicherheit im Kraftfahrzeug signifikant steigern lässt. Nachfolgend wird die Erfindung unter Bezugnahme auf die anliegenden Zeichnungen anhand von Ausführungsbeispielen näher erläutert. Es gilt jedoch der Grundsatz, dass die Ausführungsbeispiele die Erfindung nicht beschränken, sondern lediglich vorteilhafte Ausgestaltungsformen darstellen.

Es zeigt:
- Figur 1: eine dreidimensionale Ansicht von einem lediglich bereichsweise dargestellten Kraftfahrzeug-Schloss,
- Figur 2: Draufsicht auf einen Teilbereich einer Seitentür eines Kraftfahrzeugs im Bereich des Seitentürschlosses, und
- Figur 3: eine weitere Ansicht auf eine Seitentür im Bereich eines Seitentürschlosses mit weiteren Ausgestaltungsformen eines Lichtleitelements.

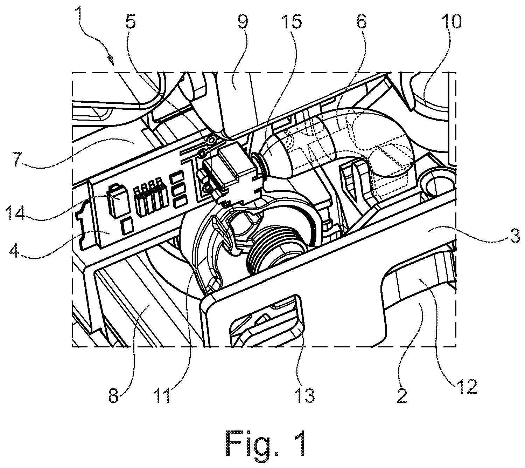

In der Figur 1 ist eine dreidimensionale Ansicht auf einen Teilbereich eines Kraftfahrzeug-Schlosses 1 wiedergegeben. Dargestellt ist ein Bereich des Kraftfahrzeug-Schlosses 1 im Bereich eines Einlaufmauls mit einer das Einlaufmaul 2 umschießenden Schlossplatte 3. Auf einer Leiterplatte 4 ist ein Leuchtmittel 5 elektrisch kontaktiert angeordnet, wobei an das Leuchtmittel 5 ein Lichtleitelement angeschlossen ist. Die Leiterplatte 4 ist unmittelbar mit einem Elektrokomponententräger 7 verbunden. Als weitere Komponenten sind ein Teil eines Schlossgehäuses, ein Elektromotor 9, Stellmittel 10, 11 und eine Drehfalle 12 zu erkennen. Eine Öffnung 13 in der Schlossplatte 3 dient zum Beispiel zur Anbindung der Schlossplatte 3 an das Schlossgehäuse 8. Auf der Leiterplatte 4 sind weitere elektrotechnische Komponenten 14 angeordnet, die zum Steuern und/oder Regeln zum Beispiel des Leuchtmittels 5 und/oder des Motors 9 dienen.

Das Leuchtmittel 5 weist einen trichterförmigen Ansatz 15 auf, mit dem das Leuchtmittel mit dem Lichtleitelement 6 verbunden ist. Das Lichtleitelement kann einstückig mit dem Schlossgehäuse 8 ausgebildet sein oder als separates Bauteil einen integralen Bestandteil des Schlossgehäuses 8 bilden. Je nach Anordnung des Leuchtmittels 5 in dem Kraftfahrzeug-Schloss 1 kann eine separate Ausbildung oder eine einstückige Ausbildung des Lichtleitelements 6 mit dem Schlossgehäuse 8 vorteilhaft sein. Für den Fall, dass das Lichtleitelement als separates Bauteil einen integralen Bestandteil des Schlossgehäuses 8 bildet, ist es denkbar das Lichtleitelement mittels Klipsen, Fügen oder Kleben anzuordnen. Mittels des Lichtleitelements 6 wird erfindungsgemäß das vom Leuchtmittel 5 emittierte Licht in Richtung der Drehfalle 12 bzw. des Einlaufmauls 2 geleitet.

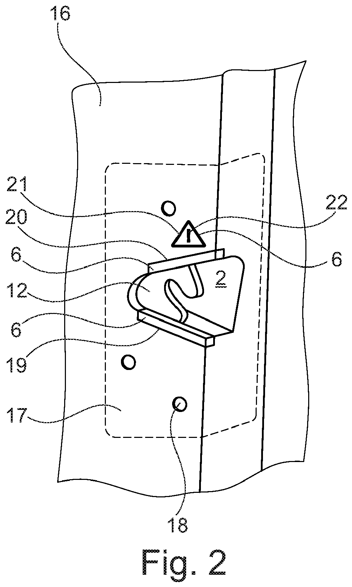

In der Figur 2 ist eine Ansicht auf eine Kraftfahrzeugtür 16 im Bereich eines Seitentürschlosses 17 wiedergegeben. Zu erkennen ist das Einlaufmaul 2 mit der im Einlaufmaul 2 angeordneten Drehfalle 12. Das Kraftfahrzeugseitentürschloss 17 wird mittels einer Verschraubung 18 mit der Kraftfahrzeugtür 16 verbunden. Auch wenn in diesem Ausführungsbeispiel explizit eine Kraftfahrzeugtür dargestellt ist, so ist die Erfindung nicht hierauf beschränkt, sondern kann natürlich auch für Schiebetüren, Klappen und/oder Abdeckungen zum Einsatz kommen.

Um das Einlaufmaul 2 herum sind erfindungsgemäß Lichtaustrittsflächen 19, 20 des Lichtleitelements 6 angeordnet. Die Lichtaustrittsflächen 19, 20 sind Bestandteil des Lichtleitelements 6. Das heißt, die Lichtaustrittsflächen sind Bestandteile des Lichtleitelements und können beispielsweise einstückig aus einem Kunststoff gebildet sein. In diesem Ausführungsbeispiel erstreckt sich das Lichtleitelement 6 lediglich bereichsweise um das Einlaufmaul 2 des Kraftfahrzeugseitentürschlosses 17 herum. Vorstellbar ist aber auch, dass eine Lichtaustrittsfläche 21 als separate Fläche 21 ausbildbar ist. Dabei kann die Lichtaustrittsfläche auch zum Beispiel ein Symbol 22 umfassen, um beispielsweise eine Signalwirkung zu erhöhen.

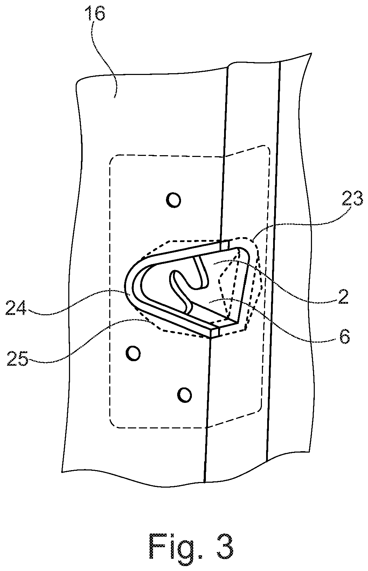

In der Figur 3 sind verschiedene Ausführungsbeispiele von Lichtaustrittsflächen 23, 24, 25, 26 wiedergegeben. Die dargestellten Ausführungsbeispiele der Lichtaustrittsflächen 19, 20, 21, 23, 24, 25, 26 sind lediglich Beispiele, die darstellen sollen, dass unterschiedliche Formen und Ausgestaltungen eines Lichtleitelements 6 zur Ausleuchtung vorstellbar sind. So umschließt die Lichtaustrittsfläche 24 beispielsweise das Einlaufmaul 2 bereichsweise, kann aber zum Beispiel aus der Kombination der Lichtaustrittsflächen 23, 24 das Einlaufmaul vollumfänglich umschließen. Vorstellbar ist es auch, dass beispielsweise erweiterte Bereiche 25 des Einlaufmauls 2 ausgeleuchtet werden, so dass sich auch Symbole, wie beispielsweise Verkehrszeichen darstellen lassen. Vorstellbar ist es auch, dass das Einlaufmaul 2 vollflächig mit dem Lichtleitelement 6 ausleuchtbar ist. Je nach Ausbildung des Lichtleitelements und der entsprechenden Lichtaustrittsfläche 19, 20, 21, 23, 24, 25, 26 ist somit eine erhöhte Signalwirkung mittels des Lichtleitelements erzielbar und folglich die Sicherheit am Kraftfahrzeug steigerbar.

### Bezugszeichenliste

- 1: Kraftfahrzeugschließeinrichtung
- 2: Einlaufmaul
- 3: Schlossplatte
- 4: Leiterplatte
- 5: Leuchtmittel
- 6: Lichtleitelement
- 7: Elektrokomponententräger
- 8: Schlossgehäuse
- 9: Motor
- 10, 11: Stellmittel
- 12: Drehfalle
- 13: Öffnung
- 14: elektrotechnische Komponenten
- 15: Ansatz
- 16: Kraftfahrzeugtür
- 17: Seitentürschloss
- 18: Schrauben
- 19, 20, 21, 23, 24, 25,: 26 Lichtaustrittsflächen
- 22: Symbol

## Patentansprüche

1. Kraftfahrzeug-Schloss, insbesondere Kraftfahrzeug-Türschloss (17), umfassend ein Schlossgehäuse (8), eine elektrische Stromversorgung (7), ein Leuchtmittel (5) und ein mit dem Leuchtmittel (5) zusammenwirkendes Lichtleitelement (6), wobei das Lichtleitelement (6) als integraler Bestandteil des Kraftfahrzeug-Schlosses ausgebildet ist, so dass das Kraftfahrzeug-Schloss zumindest bereichsweise ausleuchtbar ist,
**dadurch gekennzeichnet, dass**
- als Leuchtmittel (5) eine LED eingesetzt wird, die unmittelbar auf einer Leiterplatte (4) angeordnet ist, und dass
- mittels des Lichtleitelementes (6) das vom Leuchtmittel (5) emittierte Licht in Richtung eines Einlaufmauls (2) mit einer im Einlaufmaul (2) angeordneten Drehfalle (12) geleitet wird, wobei
- um das Einlaufmaul (2) herum Lichtaustrittsflächen (19, 20, 21, 23, 24, 25, 26) des Lichtleitelementes (6) angeordnet sind.

2. Kraftfahrzeug-Schloss nach Anspruch 1, **dadurch gekennzeichnet, dass** das Lichtleitelement (6) in das Schlossgehäuse (8) integriert ist.

3. Kraftfahrzeug-Schloss nach Anspruch 1 oder 2, **dadurch gekennzeichnet, dass** das Lichtleitelement (6) einstückig mit dem Schlossgehäuse (8) ausgebildet ist.

4. Kraftfahrzeug-Schloss nach einem der Ansprüche 1 bis 3, **dadurch gekennzeichnet, dass** das Leuchtmittel (5) unmittelbar auf einem Elektrokomponententräger (7) angeordnet ist, wobei die Leiterplatte (4) unmittelbar mit dem Elektrokomponententräger (7) verbunden ist.

5. Kraftfahrzeug-Schloss nach einem der Ansprüche 1 bis 4, **dadurch gekennzeichnet, dass** das Lichtleitelement (6) zumindest bereichsweise, vorzugsweise im Bereich der Lichtaustrittsfläche (19, 20, 21, 23, 24, 25, 26) lichtstreuende Elemente umfasst.

6. Kraftfahrzeug-Schloss nach einem der Ansprüche 1 bis 5, **dadurch gekennzeichnet, dass** das Lichtleitelement (6) zumindest bereichsweise, vorzugsweise in einem lichtleitenden Bereich, Licht fokussierende und/oder reflektierende Elemente und/oder Oberflächen umfasst.

7. Kraftfahrzeug-Schloss nach einem der Ansprüche 1 bis 6, **dadurch gekennzeichnet, dass** zumindest das Lichtleitelement (6) aus Polycarbonat oder Polymethylmethacrylat gebildet ist.

## Claims

1. Motor vehicle lock, in particular a motor vehicle door lock (17), comprising a lock housing (8), an electrical power supply (7), an illuminant (5), and a light guiding element (6) which interacts with the illuminant (5), wherein the light guiding element (6) is designed as an integral part of the motor vehicle lock, so that at least some areas of the motor vehicle lock can be illuminated,
**characterized in that**
- a LED arranged directly on a printed circuit board (4) is used as the illuminant (5)
- the light emitted by the illuminant (5) is guided towards an inlet opening (2) with a rotary latch (12) arranged in the inlet opening (2) by means of the light guiding element (6)
- light exit surfaces (19, 20, 21, 23, 24, 25, 26) of the light guiding element (6) are arranged around the inlet opening (2).

2. Motor vehicle lock according to Claim 1, **characterized in that** the light guiding element (6) is integrated in the lock housing (8).

3. Motor vehicle lock according to Claim 1 or 2, **characterized in that** the light guiding element (6) is constructed as a single part with the lock housing (8).

4. Motor vehicle lock according to any one of Claims 1 to 3, **characterized in that** the illuminant (5) is arranged directly on an electrical component carrier (7), wherein the printed circuit board (4) is connected directly to the electrical component carrier (7).

5. Motor vehicle lock according to any one of Claims 1 to 4, **characterized in that** at least in some areas the light guiding element (6) comprises light scattering elements, preferably in the region of the light exit surfaces (19, 20, 21, 23, 24, 25, 26).

6. Motor vehicle lock according to any one of Claims 1 to 5, **characterized in that** at least in some areas the light guiding element (6) comprises light focusing and/or reflecting elements and/or surfaces, preferably in a light guiding region.

7. Motor vehicle lock according to any one of Claims 1 to 6, **characterized in that** at least the light guiding element (6) is made from polycarbonate or polymethyl methacrylate.

## Revendications

1. Serrure de véhicule automobile, en particulier serrure de porte de véhicule automobile (17), comprenant un boîtier de serrure (8), une alimentation en courant électrique (7), un moyen d'éclairage (5) et un élément de guidage de lumière (6) coopérant avec le moyen d'éclairage (5), sachant que l'élément de guidage de lumière(6) est constitué comme partie intégrante de la serrure de véhicule automobile de telle manière que la serrure de véhicule automobile peut être éclairée au moins par endroits,
**caractérisée en ce**
- **qu'**une diode électroluminescente (DEL) est utilisée comme moyen d'éclairage (5), qui est directement disposée sur une plaquette de circuits imprimés (4) et en ce qu'
- au moyen de l'élément de guidage de lumière (6), la lumière émise par le moyen d'éclairage (5) est dirigée en direction d'un avaloir (2) avec un pêne pivotant (12) disposé dans l'avaloir (2), sachant que
- des surfaces de sortie de lumière (19, 20, 21, 23, 24, 25, 26) de l'élément de guidage de lumière (6) sont disposées autour de l'avaloir (2).

2. Serrure de véhicule automobile selon la revendication 1, **caractérisée en ce que** l'élément de guidage de lumière (6) est intégré dans le boîtier de serrure (8).

3. Serrure de véhicule automobile selon la revendication 1 ou 2, **caractérisée en ce que** l'élément de guidage de lumière (6) est constitué en une pièce avec le boîtier de serrure (8).

4. Serrure de véhicule automobile selon l'une quelconque des revendications 1 à 3, **caractérisée en ce que** le moyen d'éclairage (5) est disposé directement sur un support de composants électriques (7), sachant que la plaquette de circuits imprimés (4) est reliée directement au support de composants électriques (7).

5. Serrure de véhicule automobile selon l'une quelconque des revendications 1 à 4, **caractérisée en ce que** l'élément de guidage de lumière (6) comprend au moins par endroits, de préférence dans la zone de la surface de sortie de lumière (19, 20, 21, 23, 24, 25, 26), des éléments diffusant la lumière.

6. Serrure de véhicule automobile selon l'une quelconque des revendications 1 à 5, **caractérisée en ce que** l'élément de guidage de lumière (6) comprend au moins par endroits, de préférence dans une zone photoconductrice, des éléments et/ou des surfaces concentrant et/ou réfléchissant la lumière.

7. Serrure de véhicule automobile selon l'une quelconque des revendications 1 à 6, **caractérisée en ce qu'**au moins l'élément de guidage de lumière (6) est formé de polycarbonate ou de polyméthylméthacrylate.
